**Europäisches Patentamt**

**European Patent Office**

**Office européen des brevets**

(19)

(11) Veröffentlichungsnummer: **0 053 380**
**A1**

## (12) EUROPÄISCHE PATENTANMELDUNG

(21) Anmeldenummer: **81109978.7**

(22) Anmeldetag: **28.11.81**

(51) Int. Cl.³: **B 23 K 9/08**

(30) Priorität: **02.12.80 DE 3045310**

(43) Veröffentlichungstag der Anmeldung: **09.06.82**
**Patentblatt 82/23**

(84) Benannte Vertragsstaaten: **DE FR GB IT SE**

(71) Anmelder: **KUKA Schweissanlagen & Roboter GmbH,**
**Zugspitzstrasse 140, D-8900 Augsburg (DE)**

(72) Erfinder: **Mazac, Karel, Dahlienweg 1, D-8904 Friedberg**
**(DE)**
Erfinder: **Pache, Norbert, Zusmarshauser Weg 7a,**
**D-8900 Augsburg (DE)**

(74) Vertreter: **Ernicke, Hans-Dieter, Dipl.-Ing.,**
**Schwibbogenplatz 2b, D-8900 Augsburg (DE)**

(54) **Verfahren und Vorrichtung zum Schweissen magnetisierbarer Werkstücke mit umlaufendem elektrischen Lichtbogen.**

(57) Die Erfindung betrifft ein Verfahren zum Schweissen magnetisierbarer, metallischer Werkstücke mit einem durch ein Magnetfeld längs einer geschlossenen Schweisskantennahtbahn bewegten, elektrischen Lichtbogen, bei dem die zwischen mindestens zwei gleichnamigen Magnetpolen befindlichen und in zentrierter Lage gehaltenen Werkstücke bis zur gegenseitigen Berührung zwecks Zündung des Lichtbogens einander genähert, daraufhin auf einen der Schweissspaltbreite entsprechenden Abstand auseinandergerückt und schliesslich unter Aufbringung eines Stauchdrucks gegeneinander gepresst werden. Um die Halterung der Werkstücke in der jeweils schweissgerechten Lage zu vereinfachen und zu verbilligen, sieht die Erfindung vor, dass das zum Ablenken des Lichtbogens zu erzeugende Magnetfeld zum Festspannen der Werkstücke an den Magnetpolen in zentrierter Lage eingesetzt wird. Eine Schweissvorrichtung zur Durchführung des erfindungsgemässen Verfahrens weist mindestens zwei gleichnamige, der Erzeugung eines längs der Schweisskantennahtbahn bewegten, elektrischen Lichtbogens dienende Magneten (1, 2) auf, zwischen denen die Werkstücke (4, 5) zentriert gehalten und relativ zueinander mit den Magneten bewegbar sind. Erfindungsgemäss sind bei einer solchen Vorrichtung am einzelnen Magnetkern (1, 2) einerseits Zentriermittel (6) für das Werkstück (4, 5) und andererseits eine mit mindestens einem Teilbereich des Werkstücks (4, 5) zur Anlage kommende Polflächen (5, 12) vorgesehen.

0053380

## Verfahren und Vorrichtung zum Schweißen magnetisierbarer Werkstücke mit umlaufendem elektrischen Lichtbogen

Die Erfindung bezieht sich auf ein Verfahren und Vorrichtungen zum Schweißen magnetisierbarer metallischer Werkstücke mit einem durch ein Magnetfeld längs einer geschlossenen Schweißkantennahtbahn bewegten, elektrischen Lichtbogen, bei dem die zwischen mindestens zwei gleichnamigen Magnetpolen befindlichen und in zentrierter Lage gehaltenen Werkstücke bis zur gegenseitigen Berührung zwecks Zündung des Lichtbogens einander genähert, daraufhin auf einen der Schweißspaltbreite entsprechenden Abstand auseinandergerückt und schließlich unter Aufbringung eines Stauchdruckes gegeneinander gepreßt werden.

Ein derartiges Schweißverfahren ist bekannt und wird als magnetarc-Schweißverfahren bezeichnet. Hierbei müssen die miteinander zu verschweissenden Werkstücke vor dem Schweißen manuell oder hydraulisch festgespannt werden. Dieses Festspannen der Werkstücke ist teuer und – beim hydraulischen Spannen – mechanisch und elektrisch sehr kompliziert. Nicht runde Teile kann man nur schwierig oder gar nicht spannen.
Die Aufgabe der Erfindung besteht darin, die Werkstücke auf wesentlich einfachere und billigere Weise in der schweißgerechten Lage zu halten und dem vorgenannten Schweißverfahren auch unregelmäßig gestaltete Werkstücke zugänglich zu machen.
Diese Aufgabe ist neu.

Ausgehend vom eingangs erwähnten Stand der Technik besteht die erfindungsgemäße Lösung der Aufgabe darin, daß das zum Ablenken des Lichtbogens zu erzeugende Magnetfeld zum Festspannen der Werkstücke an den Magnetpolen in zentrierter Lage eingesetzt wird.

Der Vorteil der Erfindung besteht darin, daß bereits vorhandene, aber bisher ungenutzte Kräfte zum Halten des Werkstückes eingesetzt und somit die Erzeugung der bisher üblichen Spannkräfte und der damit verbundene konstruktive Aufwand eingespart werden können.

Zum Schweißen mit magnetisch bewegtem Lichtbogen braucht man magnetische Felder, die in dem Luftspalt zwischen den beiden zu schweißenden Teilen senkrecht zu der Lichtbogen- Achse stehen müssen, die aber in anderen Teilen des gesamten Systems in verschiedenen Richtungen laufen können, auch z.B. parallel zu der Lichtbogen-Achse. Die Erfindung befaßt sich damit, die Kräfte, die zwischen einem magnetischen System (egal ob dieses elektrisch oder durch einen Permanentmagnet erregt wird) und einem magnetisierbaren Material automatisch entstehen, zum Halten von mindestens einem der beiden zu verschweißenden Bauteile zu verwenden, wobei die Richtung des Feldes in dem Luftspalt nicht beeinflußt werden darf. Im Grunde handelt es sich um zwei gegeneinander wirkende magnetische Systeme, die durch eine oder mehrere Magnetquellen magnetisiert werden, die symmetrisch oder unsymmetrisch aufgebaut sind, und deren magnetische Trennfläche genau in dem Luftspalt zwischen den beiden Bauteilen liegt.

In einer vorteilhaften Weitergestaltung des erfindungsgemäßen Verfahrens ist vorgesehen, daß der Magnetisierungsstrom stufenweise geschaltet wird, indem zum Festspannen der Werkstücke zunächst ein verminderter Magnetisierungsstrom und danach der volle Schweißstrom erzeugt werden.

Diese Maßnahme wirkt sich energiesparend und bedienungsmäßig günstig aus, muß aber nicht unbedingt ausgeübt werden. Man kann vielmehr auch sofort den vollen Schweißstrom einleiten und dadurch die erfindungsgemäße Wirkung erzeugen. Allerdings entstehen dadurch für den praktischen Gebrauch hinderliche Probleme hinsichtlich der Kühlung der
Schweißvorrichtung und der Handhabung der Werkstücke, weshalb die
stufenweise Schaltung des Magnetisierungsstromes vorzuziehen ist.

Gegenstand der Erfindung ist auch eine Schweißvorrichtung zur Durchführung des erfindungsgemäßen Verfahrens, die mit ihren Merkmalen
in den Unteransprüchen gekennzeichnet ist.

Im bevorzugten Anwendungsfall wird man als Zentriermittel für das
Werkstück Gegenstände aus nicht magnetisierbarem Material, z.B.
Bronze, verwenden. Diese haben den Vorteil, daß sie das Magnetfeld
nicht beeinflussen oder stören, so daß dieses für seine zwei Wirkungen voll ausgenutzt werden kann, nämlich zum Halten des Werkstückes und zur Bildung des bewegten, elektrischen Lichtbogens.

Man kann natürlich in bestimmten Fällen die Polfläche des Eisenkerns
der Magneten auch als Zentriermittel ausgestalten. Dies ist aber nur
dann durchführbar, wenn durch die magnetisierbare Form des Zentriermittels keine Beeinflussung des Magnetfeldes stattfinden kann.

Der besondere Vorteil der erfindungsgemäßen Vorrichtung besteht
darin, Werkstücke unsymmetrischer oder unregelmäßiger Form festspannen und schweißen zu können, was mit herkömmlichen Spannvorrichtungen
nicht oder nur mit erheblichem Aufwand bewältigt werden konnte. Hierbei werden erfindungsgemäß die Zentriermittel eine dem Werkstück angepaßte Form aufweisen und aus nicht magnetisierbarem Material bestehen. Überraschenderweise wurde festgestellt, daß hierbei zwei oder
mehr Magnetkerne je Werkstück in voneinander distanzierte Lage eingesetzt werden können, die mit ihren Polflächen auf passende Teilbereiche der Werkstücke einwirken und dennoch ungehindert einen umlaufenden Lichtbogen erzeugen sowie die Teilbereiche der Werkstücke zu verschweißen gestattet, die zwischen den Polflächen·liegen. Allerdings empfiehlt es sich in diesem Fall, die als Aufnahme gestalteten Zentriermittel so steif zu gestalten, daß über sie der Stauchdruck auf die Werkstücke übertragen werden kann.

Einzelheiten der Erfindung sind in der Zeichnung schematisch und beispielsweise dargestellt. Es zeigen:

Fig. 1: einen Längsschnitt durch eine Schweißvorrichtung für zwei schalenförmige Werkstücke,

Fig. 2: eine Ausführungsform gemäß Fig. 1 für das Verschweißen einer Platte mit einem schalenförmigen Werkstück und

Fig. 3: eine Ausgestaltung einer Schweißvorrichtung für unregelmäßig gestaltete Werkstücke.

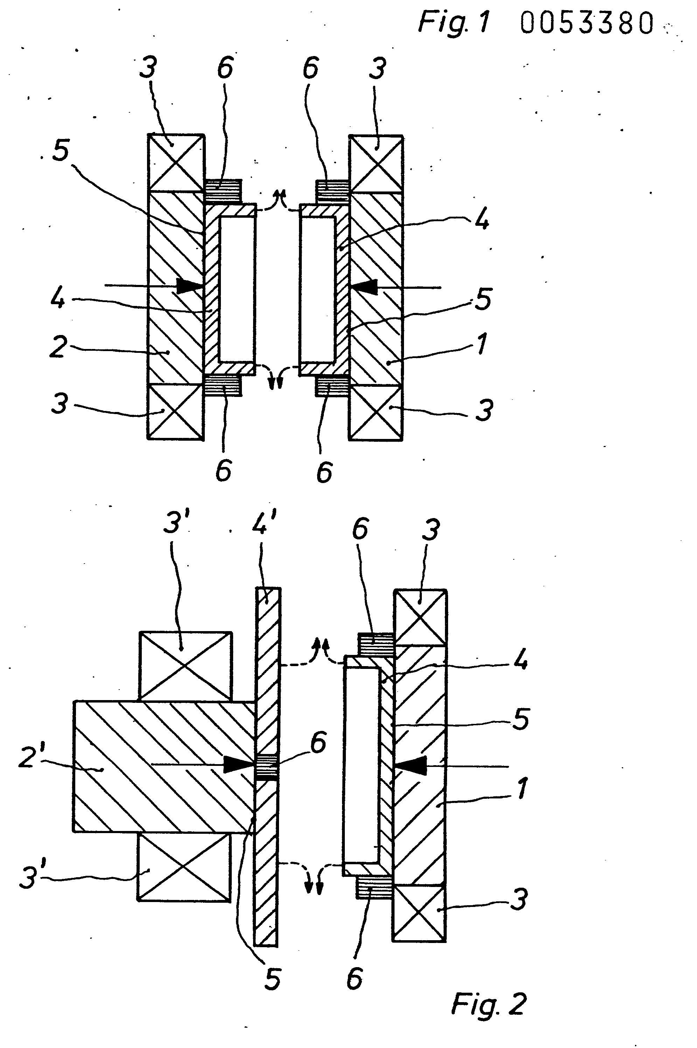

In Figur 1 und 2 sind die beiden Eisenkerne 1 und 2 bzw. 2' jeweils mit einer Spule 3 bzw. 3' bewickelt. Die stark ausgezogenen Pfeile geben die Magnetisierungsrichtung bei Einschaltung des Spulenstromes an. An den durch die Kerne 1 und 2 bzw. 2' gebildeten Polflächen 5 werden bei Stromfluß infolge der Magnetisierung die aus magnetisierbarem Material bestehenden Werkstücke, z.B. Stahl, durch die Kraft des Magnetfeldes festgehalten. In Figur 1 handelt es sich hierbei um zwei Rundteile 4, in Figur 2 um ein Rundteil 4 und eine Platte 4', die miteinander zu verschweißen sind.

Bei Annäherung der durch die Magnetpole festgehaltenen Werkstücke hat das Magnetfeld im Bereich zwischen den Werkstücken 3,4 bei gleichnamigen Polen, also bei entgegengesetzter Magnetisierung einen ungefähren Verlauf, wie er durch die gestrichelt gezeichneten Pfeile in Figur 1 und 2 dargestellt ist. Es stellt sich also in der Mittenebene zwischen den Werkstücken im Bereich des Schweißspaltes stets eine zur Lichtbogenrichtung senkrechte Magnetfeldkomponente ein, die den Lichtbogen in bekannter Weise bewegt. Mit 6 sind Zentriermittel aus nicht magnetisierbarem Material zur Aufnahme der Werkstücke 4, die die Werkstücke führen und gegen seitliches Verrutschen sichern, bezeichnet.

Das Schweißverfahren wird wie folgt ausgeführt:

Bei ausgeschaltetem Magnetisierstrom werden die Werkstücke 3,4 lose in die durch die Zentriermittel gebildete Aufnahme eingesetzt. Wird nun der Spulenstrom in geringer Stärke eingeschaltet, führt dies zunächst zum Festspannen der Werkstücke 3,4 an den Polflächen 5 der Eisenkerne 1, 2, 2'. Wenn nun die Werkstücke 3,4 einander mit den Eisenkernen 1, 2 bis zur Berührung genähert und der volle Schweißstrom eingeschaltet wird, erfolgt die Zündung des umlaufenden elektrischen Lichtbogens, woraufhin die Werkstücke 3,4 in eine dem vorgegebenen Schweißspalt entsprechende Distanz voneinander gebracht werden. Der Lichtbogen bringt die miteinander zu verschweißenden Kanten mit Ränder, die umlaufend geschlossen sein müssen, auf Schweißtemperatur, woraufhin die Werkstücke 3,4 gegeneinander schlagartig gestaucht werden und der Schweißstrom wieder abgeschaltet ist.

Die nicht magnetisierbaren Zentriermittel 6 können beispielsweise aus Messing bestehen. Sie haben beispielsweise in Fig. 1 die Form eines das Werkstück 3,4 umgreifenden Ringes und in Fig. 2 eines in eine Bohrung des Werkstückes 4 eintauchenden Zapfens. Je nach der Form der Werkstücke können auch Zentriermittel stellenweise mit den Magnetkernen 1, 2 verbunden sein.

- 6 -

0053380

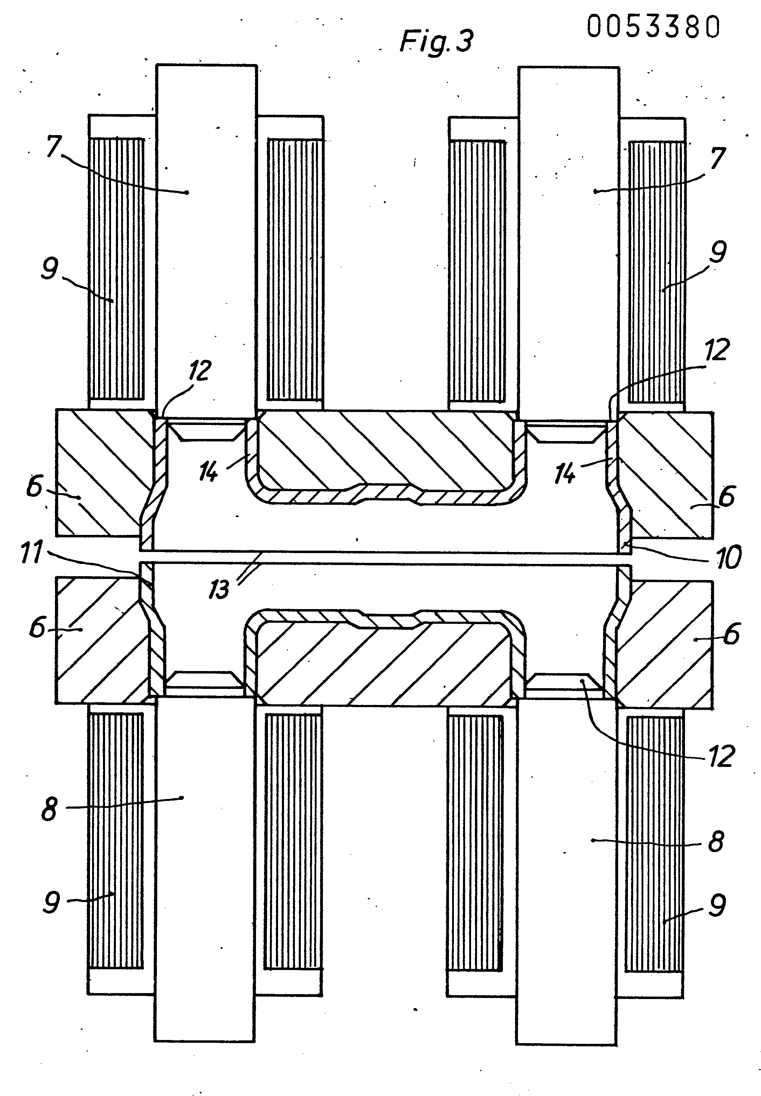

Beim Beispiel der Fig. 3 sind zwei unregelmäßige Werkstücke 10,11 mit Ansatzstutzen 14 dargestellt, die entlang der umlaufenden Ränder 13 (Schweißkantennahtbahn) zur Bildung eines Gehäuses, beispielsweise für Heizkörper, verschweißt werden sollen.

In diesem Falle werden die Werkstücke 10,11 von ihrer Form angepaßten Zentriermitteln 6 aufgenommen, die aus nicht magnetisierbarem Material, z.B. Bronze, bestehen und geeignet sind, die Stauchkraft auf die Werkstücke 10,11 zu übertragen. Hierbei werden für jedes Werkstück 10,11 zwei voneinander distanzierte, mit Wicklungen 9 versehene Eisenkerne 7, 8 vorgesehen, die mit ihren gleichnamigen Polen 12 die Werkstücke 10, 11 an den Stirnbereichen der Ansatzstutzen 14 bei Einleitung des Magnetisierungsstromes festhalten. Dessen ungeachtet bildet sich der Lichtbogen entlang der Ränder 13 aus.

<u>P a t e n t a n s p r ü c h e</u>

1) Verfahren zum Schweißen magnetisierbarer metallischer Werkstücke mit einem durch ein Magnetfeld längs einer geschlossenen
Schweißkantennahtbahn bewegten, elektrischen Lichtbogen, bei
dem die zwischen mindestens zwei gleichnamigen Magnetpolen befindlichen und in zentrierter Lage gehaltenen Werkstücke bis
zur gegenseitigen Berührung zwecks Zündung des Lichtbogens
einander genähert, daraufhin auf einen der Schweißspaltbreite
entsprechenden Abstand auseinandergerückt und schließlich unter
Aufbringung eines Stauchdruckes gegeneinander gepreßt werden,
dadurch g e k e n n z e i c h n e t , daß das zum Ablenken des
Lichtbogens zu erzeugende Magnetfeld zum Festspannen der Werkstücke an den Magnetpolen in zentrierter Lage eingesetzt wird.

2) Verfahren nach Anspruch 1, dadurch g e k e n n z e i c h n e t ,
daß der Magnetisierungsstrom stufenweise geschaltet wird, indem
zum Festspannen der Werkstücke zunächst ein verminderter Magnetisierungsstrom und danach der volle Schweißstrom erzeugt werden.

3) Schweißvorrichtung zur Durchführung des Verfahrens nach Anspruch
1 oder 2, bei der die Werkstücke im Bereich zwischen mindestens
zwei gleichnamigen, der Erzeugung eines längs der Schweißkantennahtbahn bewegten, elektrischen Lichtbogens dienenden Magneten
zentriert gehalten und relativ zueinander mit den Magneten bewegbar sind, dadurch g e k e n n z e i c h n e t , daß am einzelnen Magnetkern (1, 2) einerseits Zentriermittel (6) für das
Werkstück (4, 5) und andererseits eine mit mindestens einem Teilbereich des Werkstückes (4, 5) zur Anlage kommenden Polfläche
(5, 12) vorgesehen sind.

4) Schweißvorrichtung nach Anspruch 3, dadurch g e k e n n -
z e i c h n e t, daß die Zentriermittel (6) aus nichtmagnetisierbarem Material bestehen.

5) Schweißvorrichtung nach Anspruch 3 oder 4, dadurch g e k e n n -
z e i c h n e t, daß die Zentriermittel (6) der Form des Werkstückes (4, 5, 10, 11) mindestens stellenweise nachgebildet sind
und eine den Stauchdruck übertragende Dimensionierung und Formgebung aufweisen.

6) Schweißvorrichtung nach Anspruch 3 oder folgenden, dadurch g e -
k e n n z e i c h n e t, daß zwei oder mehr Magnetkerne (7, 8)
in voneinander distanzierter Lage mit ihren Polflächen (12) auf
passende Teilbereiche (14) der Werkstücke (10, 11) einwirken.

7) Schweißvorrichtung nach Anspruch 3, dadurch g e k e n n z e i c h -
n e t, daß aus magnetisierbarem Material bestehende Zentriermittel so angeordnet sind, daß sie das zur Erzeugung des umlaufenden
Lichtbogens erforderliche Magnetfeld nicht ablenken oder stören.

Dipl.-Ing. H.-D. Ernicke
Patentanwalt

Fig. 1    0053380

Fig. 2

*Fig. 3*

**Europäisches Patentamt**

**EUROPÄISCHER RECHERCHENBERICHT**

0053380

Nummer der Anmeldung

EP 81 10 9978

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | NL - A - 67 14 207 (VEB LOKOMOTIV-BAU KARL MARX) <br><br> * Seiten 7 und 8 * <br><br> -- | <br><br> 1 |
| Y | DE - A - 2 258 417 (KELLER & KNAPPICH) <br><br> * Seiten 5 und 6 * <br><br> -- | <br><br> 1-7 |
| Y | US - A - 1 947 077 (CHAPMAN) <br><br> * Seite 3, Zeilen 107-136 * <br><br> --------------- | <br><br> 1 |

**KLASSIFIKATION DER ANMELDUNG (Int. Cl.³)**

B 23 K 9/08

**RECHERCHIERTE SACHGEBIETE (Int. Cl.³)**

B 23 K 9/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 11-03-1982 | HOORNAERT |

EPA form 1503.1 06.78